# EUROPEAN PATENT APPLICATION

(11) **EP 3 176 490 A1**
(43) Date of publication of application: **07.06.2017**
(21) Application number: 15382600.3
(22) Date of filing: 02.12.2015
(51) Int. Cl.: F17C 1/12, F17C 1/14, F17C 13/00

(54) **CRYOGENIC TANK AND METHOD OF STORING CRYOGENIC LIQUIDS**

(71) Applicant: The Boeing Company, Chicago, IL 60606-1596 (US)
(72) Inventor: SERROT HAUKE, Enrique Emilio, 28042 MADRID (ES); FERREYRA, Eduardo Gabriel, 28042 MADRID (ES); LEMUS, Jose Luis, 28042 MADRID (ES); BLANCO, Jose Antonio, 28042 MADRID (ES); LAPEÑA-REY, Nieves, 28042 MADRID (ES)
(74) Representative: Carvajal y Urquijo, Isabel

(57) **Abstract**

This disclosure relates to a cryogenic tank which has an inner storage volume (102) within a first wall (104). The cryogenic tank (100) comprises additionally a plurality of chambers (108) within the inner storage volume (102), these chambers (108) placed longitudinally along the first wall (104), such that at least one of the chambers (108) is defined by a portion of the first wall (104).

Additionally, this disclosure relates to a method of storing cryogenic liquids, said method comprising storing the cryogenic liquids inside a cryogenic tank (100) comprising a plurality of chambers (108).

## Description

### FIELD

The present disclosure is encompassed within the field of cryogenic liquids, specifically to the storage of liquid hydrogen used as fuel, and more specifically, to cryogenic tanks used for storing said liquid hydrogen.

This disclosure relates, in particular, to a cryogenic tank comprising a plurality of chambers within the inner storage volume of the tank, said chambers being connected to the inner surface of the tank. Additionally, this disclosure relates to a method of storing cryogenic liquids, particularly liquid hydrogen. The method comprises storing the cryogenic liquid inside a cryogenic tank comprising a plurality of chambers.

### BACKGROUND

It is known that cryogenic liquids must be kept at very low temperatures. Specifically, liquid hydrogen must be kept at temperatures below -252.87 ºC, the boiling point of hydrogen. When using liquid hydrogen as fuel in unmanned aerial vehicles, heat and unavoidable maneuvers and vibrations can transfer some energy to the liquid hydrogen. Any energy transferred to the liquid hydrogen is intended to be prevented, in order to avoid unnecessary boil-off of the hydrogen, which would compromise the vehicle's endurance.

When liquid hydrogen is used as fuel in unmanned aerial vehicles, if liquid hydrogen boil-off rate exceeds the hydrogen consumption as fuel, this excess of hydrogen boil-off has to be vented to the atmosphere to prevent an overpressure of the fuel tank, thus, losing the usable energy contained in the vented hydrogen. For long endurance flights, the amount of vented hydrogen is not negligible and can be as large as 1/3 to 1/2 of the total stored hydrogen.

There are two main factors contributing to the transfer of energy to the liquid hydrogen and subsequent boil-off: energy transfer due to heat leaks of the tank itself, and energy transfer due to the liquid movement inside the tank during turbulence, maneuvers and vibrations of the vehicles.

The boil-off due to heat leaks can be reduced improving the insulation of the tank to reduce the heat leaks thereof. Nowadays, the goal of this strong thermal insulation is to avoid as much as possible the amount of heat reaching the liquid hydrogen, thus avoiding phase change from liquid to gas. Dewar type vessels configurations with one or multiple insulation barriers are generally used for this purpose. Usually vacuum barriers are used, but any other high insulation material may be used as well.

With reference to the transfer of energy due to maneuvers and vibrations of vehicles, a cryogenic tank filled with a cryogenic liquid, subjected to any movement, will lead to a general movement and turbulence inside the whole fluid. This energy will cause a phase change from liquid to gas and if such gas is not consumed it will have to be vented to prevent an overpressure of the cryogenic tank.

So, the excess of hydrogen boil-off regarding the hydrogen consumption as fuel due to heat leaks and to maneuvers and vibrations has to be vented, losing the usable energy contained in that excess of hydrogen boil-off. Nowadays there is no solution to tackle the boil-off due to maneuvers and vibrations which transfer energy to the liquid hydrogen.

### SUMMARY

The present disclosure provides a cryogenic tank which has an inner storage volume within a first wall. This cryogenic tank comprises a plurality of chambers, which are within the inner storage volume, and are placed longitudinally along the first wall in such a way that at least one of the chambers is defined by a portion of the first wall, providing in that way a horizontal disposition of the chambers.

According to a preferred embodiment, the chambers of the cryogenic tank are disposed in such a way that a plurality of the chambers are circumferentially disposed along the first wall.

In accordance to a particular embodiment, at least one of the chambers of the cryogenic tank defined by a portion of the first wall is connected to the first wall.

According to a preferred embodiment, each chamber of the plurality of chambers comprises at least a hole at each wall of the chamber, In order to connect the chambers to the inner surface of the cryogenic tank.

Preferably, the height of the chambers is approximately equal to the average thickness of the liquid-gas interphase of the cryogenic liquid for operating internal pressures and temperatures for a given tank design, in order to minimize the movement of the cryogenic liquid inside the chambers. Liquid-gas interphase of the cryogenic liquid depends on the internal pressure and temperature of the cryogenic tank.

With accord to a particular embodiment, the chambers extend radially within the inner storage volume, and preferably these chambers are a honeycomb structure.

Additionally, the volume inside the cryogenic tank occupied by these walls is almost negligible since said walls are thin enough.

Regarding the material, the walls of the chambers are made of any material adequate to deal with cryogenic temperatures, particularly they are made of metal, and in a preferred embodiment they are made of aluminum.

According to different embodiments, at least an insulation barrier is placed around the first wall in order to decrease the heat leaks, and in accordance with a preferred embodiment, the cryogenic tank is a double-walled tank which comprises the first wall and a second wall. Preferably the tank comprises at least an insulation barrier between the first and the second wall, which may be a vacuum barrier.

Additionally, the present disclosure provides a method of storing cryogenic liquids, which comprises storing said cryogenic liquids inside a cryogenic tank comprising a plurality of chambers.

With accord to a preferred embodiment, the method comprises connecting the chambers by means of at least a hole at each wall of the chambers.

The features, functions and advantages that have been discussed can be achieved independently in various embodiments or may be combined in yet other embodiments further details of which can be seen with reference to the following description and drawings.

### BRIEF DESCRIPTION OF THE DRAWINGS

Next, in order to facilitate the comprehension of this disclosure, in an illustrative rather than limitative manner a series of embodiments with reference to a series of figures shall be made below.
Figure 1 is a cryogenic tank with a section cut showing the inside configuration of an exemplary embodiment of a cryogenic tank.
Figure 2 shows a cross section of the embodiment of the cryogenic tank of figure 1.
Figure 3 shows a close-up view of the chambers shown at the embodiment of the cryogenic tank of figures 1 and 2.
Figure 4 shows a longitudinal section of the embodiment of the cryogenic tank of figures 1, 2 and 3.
Figure 5 is a close-up view of the chambers according a preferred embodiment, which shows the relationship between the height of the chambers and the liquid-gas interphase, according a specific tank design.

These figures refer to the following set of elements:
- 100.: cryogenic tank
- 102.: inner storage volume of the cryogenic tank
- 104.: first wall of the cryogenic tank
- 106.: second wall of the cryogenic tank
- 108.: chambers within the inner storage volume
- 110.: walls of the chambers
- 112.: holes at the walls of the chambers
- LP.: liquid phase of cryogenic fuel inside the chambers
- GP.: gas phase of cryogenic fuel inside the chambers
- LG.: liquid-gas interphase of cryogenic fuel inside the chambers
- t.: thickness of the liquid-gas interphase of cryogenic fuel
- H.: height of the chambers

### DETAILED DESCRIPTION

The present disclosure refers to a cryogenic tank 100 which comprises an inner storage volume 102, where the cryogenic liquid is stored, within a first wall 104. The cryogenic tank 100 additionally comprises a plurality of chambers 108, which are within the inner storage volume 102 and they are placed longitudinally along the first wall 104 in such a way that at least one of the chambers 108 is defined by a portion of the first wall 104. This configuration provides a horizontal disposition of the chambers 108 inside the cryogenic tank 100, which implies that a certain number of these chambers 108 remain full of cryogenic liquid, with no liquid-gas interphase LG on them.

This plurality of chambers 108 minimize any possible movement of the cryogenic liquid, and specifically of the hydrogen liquid used as fuel inside the cryogenic tank 100 during aircraft maneuvers and generally non steady conditions of flying, as turbulences for example. Therefore, this cryogenic tank 100 minimizes the energy transferred to the liquid hydrogen due to movement or vibrations, thus minimizing the amount of unwanted boil-off of hydrogen due to this movement, and avoiding the venting of an undue volume of gas hydrogen and the loss of the usable energy contained in this vented fuel gas hydrogen. So, the amount of useful liquid hydrogen will be greater, and the usable energy contained inside this multi-chamber cryogenic tank 100 will be higher than the energy of a conventional cryogenic tank.

So, this embodiment presents a solution that will increase the applicability of liquid hydrogen as fuel in moving vehicles, and in particular in unmanned air vehicles.

Although this disclosure is specifically made for a cryogenic tank for storing liquid hydrogen used as fuel, any other cryogenic liquid can be stored inside the cryogenic tank disclosed.

Figures show a preferred embodiment of the cryogenic tank 100 including an inner storage volume 102 within a first wall 104. As it can be seen in these figures, the cryogenic tank 100 comprises within the inner storage volume 102 a plurality of chambers 108 which are disposed longitudinally along the first wall 104, in such a way that at least one of the chambers 108 is defined by a portion of the first wall 104. So, by means of a matrix inside the cryogenic tank 100, this embodiment converts a single chamber of the original inner storage volume 102 into a multi-chamber one, which will minimize and smooth the movement of the liquid hydrogen inside the cryogenic tank 100 in a moving vehicle, during unavoidable aircraft manoeuvres and/or the natural shaking of an aircraft flying in a non-laminar atmosphere conditions or turbulences.

Preferably, as it can be seen in the figures, a plurality of chambers 108 is circumferentially disposed along the first wall 104.

In accordance with a particular embodiment, at least one of the chambers 108 of the cryogenic tank 100 defined by a portion of the first wall 104 is connected to the first wall 104.

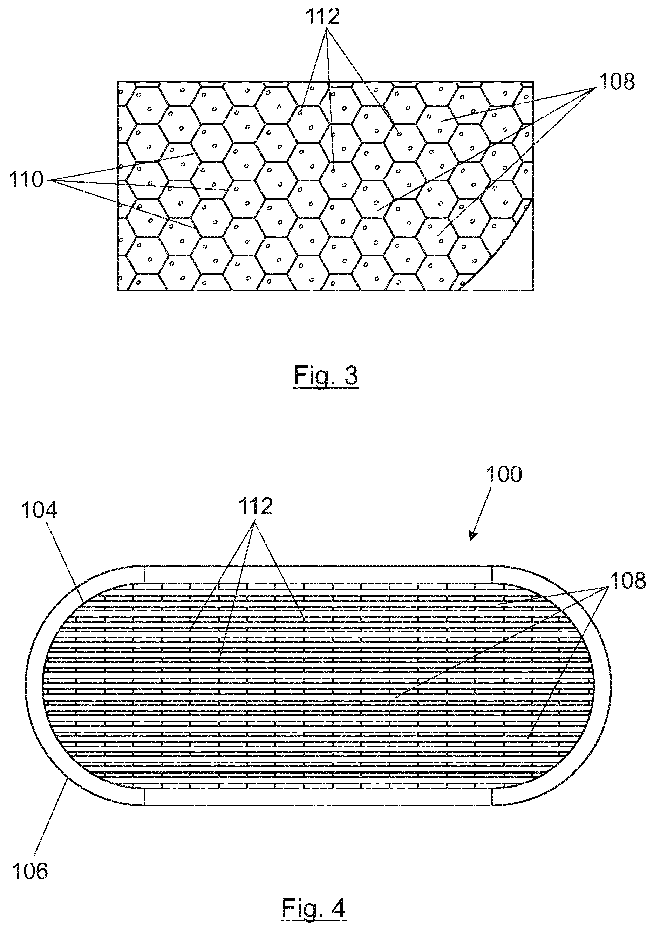

According to an exemplary embodiment, each chamber 108 of the plurality of chambers 108 comprises at least a hole 112 at each wall 110 of the chamber 108, so the hydrogen at liquid phase LP and gas phase GP can flow around the whole cryogenic tank 100, thus this multi-chamber cryogenic tank 100 acts as a single-chamber tank for practical purposes regarding the hydrogen gas consumption and tank refuelling. Figure 3 is a close-up view of the embodiment, which shows the holes 112 at the walls 110 of the chambers 108.

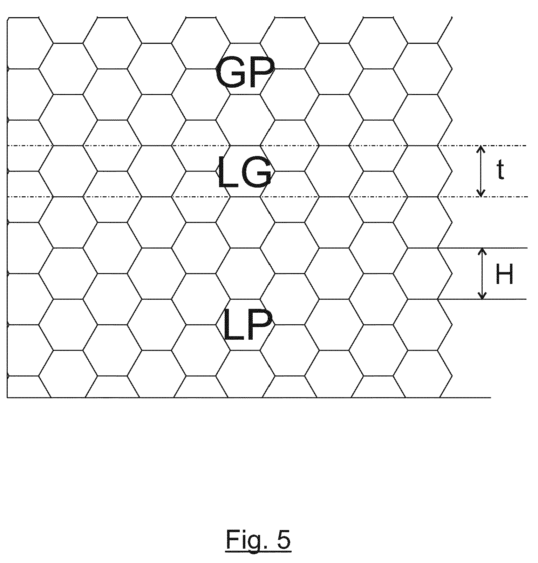

With accord to a preferred embodiment of the invention, the height of these chambers 108 is substantially equal to the average thickness of the liquid-gas interphase LG of the cryogenic liquid stored in the cryogenic tank 100 for operating internal pressures and temperatures for a given tank design, in order to minimize the movement of the liquid inside the chambers 108. Liquid-gas interphase LG of the cryogenic liquid depends on the internal pressure and temperature of the cryogenic tank. Figure 5 shows this embodiment of the height of the chambers substantially equal to the average thickness of the liquid-gas interphase LG of the cryogenic liquid.

So, with the single-chamber converted in small-holes-intercommunicated multiple mini-chambers 108, only a few chambers, those containing the liquid-gas interphase LG, will allow an important movement of the liquid inside them. The rest of the chambers 108 will remain full of liquid phase LP, so the movement inside them will be much lower, if any.

Reducing the energy transferred to the liquid hydrogen and, thus, reducing the hydrogen vented to the atmosphere from the gas phase GP without being used, leads to smaller and lighter tanks and less liquid hydrogen needed for flights, which could translate into longer flights if desirable.

Another advantage of this cryogenic tank is that preventing the movement of a liquid, fuel in this case, inside a tank of an aircraft, is always desirable in order to avoid mass unbalance due to the mass of the fluid being displaced.

Preferably, the diameter of the holes 112 is from 1 to 2 mm, small enough to allow slow liquid phase LP circulation and free gas phase GP circulation, but not allow massive liquid hydrogen between chambers 108. Additionally, as stated previously, the horizontal disposition of the chambers 108 inside the cryogenic tank 100 allows some of the chambers 108 to remain full of cryogenic liquid phase LP, with no liquid-gas interphase LG. The diameter of the holes 112 are such that during aircraft maneuvers, turbulences and vibrations the cryogenic liquid inside the chambers 108 full of liquid phase LP only, will remain relatively motionless within the chamber.

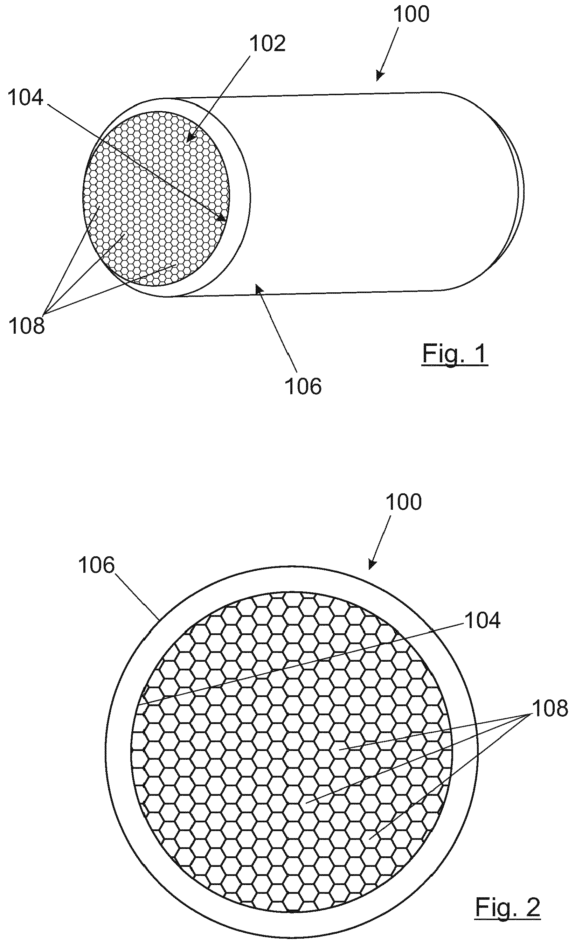

As shown in figures 1, 2 and 3, with accord to a particular embodiment, the plurality of chambers 108 extend radially within the inner storage volume 102. Preferably, as it can be seen in figure 3, the plurality of chambers 108 form a honeycomb type structure, although the chambers 108 may have a different pattern type, e.g. square, rectangular, triangular or rhomboid.

According to a preferred embodiment, the length of the chambers 108 is substantially equal to the length of the cryogenic tank 100, as shown in figure 4, although other embodiments could be possible, for example two or more groups of chambers 108 joined together longitudinally to cover all the length of the tank.

Regarding the materials, with reference to an exemplary embodiment, the walls 110 of the chambers 108 are made of thin layers made of a light metal, being this metal preferably aluminum, which is very suitable for cryogenic temperatures.

Additionally, the volume inside the cryogenic tank 100 occupied by these walls 110 is almost negligible since said walls 110 are thin enough.

Further, these light metal walls 110 conduct heat between the cryogenic liquid and the space within the cryogenic tank 100 not occupied by the cryogenic liquid, allowing for a more uniform temperature within the cryogenic tank 100.

According to different embodiments, at least an insulation barrier is provided around the first wall.

With accord to an exemplary embodiment, the cryogenic tank 100 is a double-walled tank comprising the first wall 104 and a second wall 106 enclosing said first wall 104.

Particularly, this double-walled cryogenic tank 100 is a Dewar-type tank, which may comprise at least an insulation barrier between the first wall 104 and the second wall 106, which preferably is a vacuum barrier.

Further, these embodiments are a passive solution that does no consume any energy or requires any control strategy.

Additionally, the present disclosure relates to a method of storing cryogenic liquids, the method comprising storing the cryogenic liquids inside a cryogenic tank 100 comprising a plurality of chambers 108.

Although this disclosure is specifically made for a method of storing liquid hydrogen used as fuel, any other cryogenic liquid can be stored according the method disclosed.

According a preferred embodiment, the method comprises connecting the chambers 108 of the plurality of chambers 108 by means of at least a hole 112 at each wall 110 of the chambers 108.

## Claims

1. A cryogenic tank comprising
- an inner storage volume (102) within
- a first wall (104),
and a plurality of chambers (108) within the inner storage volume (102), wherein the plurality of chambers (108) are placed longitudinally along the first wall (104), such that at least one of the chambers (108) is defined by a portion of the first wall (104).

2. The cryogenic tank of claim 1, wherein the chambers (108) are disposed such that a plurality of the chambers (108) are circumferentially disposed along the first wall (104).

3. The cryogenic tank of claim 1, wherein each chamber (108) of the plurality of chambers (108) comprises at least a hole (112) at each wall (110) of the chamber (108).

4. The cryogenic tank of claim 1, wherein the at least one of the chambers (108) defined by a portion of the first wall (104) is connected to the first wall (104).

5. The cryogenic tank of claim 1, wherein the height of the chambers (108) is substantially equal to the average thickness of the liquid-gas interphase (LG) of the cryogenic liquid stored in the cryogenic tank (100).

6. The cryogenic tank of claim 1, wherein the plurality of chambers (108) are a honeycomb type structure.

7. The cryogenic tank of claim 1, wherein the plurality of chambers (108) have a pattern type selected between square, rectangular, triangular and rhomboid.

8. The cryogenic tank of the preceding claims, wherein the walls (110) of the chambers (108) are made of metal.

9. The cryogenic tank of claim 8, wherein the metal is aluminum.

10. The cryogenic tank of the preceding claims, wherein the cryogenic tank (100) is a double-walled tank comprising
- the first wall (104), and
- a second wall (106) enclosing said first wall (104).

11. The cryogenic tank of claim 10, wherein the cryogenic tank (100) comprises at least an insulation barrier between the first wall (104) and the second wall (106).

12. The cryogenic tank of claim 11, wherein the insulation barrier between the first wall (104) and the second wall (106) is a vacuum barrier.

13. Method of storing cryogenic liquids, said method comprising storing said cryogenic liquids inside the cryogenic tank of claim 1.

14. The method of claim 13, said method comprising connecting the chambers (108) of the plurality of chambers (108) by means of at least a hole (112) at each wall (110) of the chambers (108).
